# EUROPÄISCHE PATENTANMELDUNG

(11) **EP 0 610 703 A2**
(43) Veröffentlichungstag der Anmeldung: **17.08.1994**
(21) Anmeldenummer: 94100925.0
(22) Anmeldetag: 22.01.1994
(51) Int. Cl.: G05D 7/03, F24D 19/10

(54) **Regler**

(30) Priorität: 06.02.1993 DE 4303483
(71) Anmelder: IWK Regler und Kompensatoren GmbH, D-76297 Stutensee (DE)
(72) Erfinder: Mall, Horst, D-76131 Karlsruhe (DE); Feuchtmann, Dieter, D-76297 Stutensee (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Um bei einer Heizungsanlage mit mehreren Strängen einerseits vom Öffnungszustand der Ventile an den mehreren an einem Strang vorgesehenen Heizkörpern Voreinstellungen zu ermöglichen und andererseits sowohl sicherzustellen, daß alle Nutzerstellen hinreichend mit Heizflüssigkeit versorgt werden, dennoch aber die Thermostatventile der einzelnen Heizkörper ruhig arbeiten und nicht pfeifen, sieht die Erfindung einen Strangregler für einzelne Versorgungsstränge einer Heizungsanlage vor mit einem Ventilgehäuse (2), in dem zwischen einem Einlaß (3) und einem Auslaß (4) ein eine Drosselstelle (9) bildender Durchfluß-Sollwert-Einsteller (8, 11, 12) angeordnet ist und das ein Ventil (7) mit einem Verschlußstück (21) aufweist, und mit einem Stellgliedgehäuse (27), in dem ein erster Druckraum (36) mit einem Bereich stromab der Drosselstelle (9) in Fluidverbindung (41, 42) steht, der erste Druckraum (36) durch ein Durchflußstellglied (28) von einem mit einem ersten Steueranschluß (43) versehenen zweiten Druckraum (37) getrennt ist und dieser durch ein Druck-Stellglied (29) von einem mit einem zweiten Steueranschluß (44) versehenen Druckraum (38) getrennt ist, und wobei mit dem Stellgliedgehäuse (27) ein Druck-Sollwert-Einsteller (54 bis 59) verbunden ist.

## Beschreibung

Die Erfindung betrifft einen Regler, insbesondere für einzelne Versorgungsstränge einer Heizungsanlage, mit einem Ventilgehäuse mit einem Ventil, das durch mindestens ein Durchflußregelglied steuerbar ist.

Eine Heizungsanlage weist üblicherweise mehrere einzelne Versorgungsstränge auf, die in der Regel vertikal vom Kellerraum im Gebäude nach oben geführt sind, wobei sich an einem Versorgungsstrang mehrere Heizkörper in mehreren Etagen im Haus befinden, die jeweils über Thermostatventile geregelt sind. Es ist dabei einerseits sicherzustellen, daß auch alle Nutzerstellen, d.h. alle Heizkörper, hinreichend mit Heizflüssigkeit versorgt werden, andererseits muß die Druckdifferenz an den jeweiligen Thermostatventilen derart sein, daß diese ruhig arbeiten und keine Pfeifgeräusche entwickeln.

Für Fernwärmeanlagen sind Regler mit einem Zweikammergehäuse bekannt. Diese sind aber zum Einsatz in einer Hausversorgungsanlage mit Versorgungssträngen für mehrere Verbraucher nicht vorgesehen und nicht geeignet. Auch sind sie aufwendig und eine Sollwert-Ein- oder Verstellung zumindestens eines Regelglieds ist nicht möglich.

Die DE-AS 12 53 429 zeigt eine Regelvorrichtung für Heizungsanlagen, insbesondere solche, die von einem Fernheiznetz gespeist werden, mit einem Durchfluß-Regler im Rücklauf, wobei der Regler ein durch ein Regelglied gesteuertes Ventil aufweist. Die Umschaltvorrichtung schaltet den Vorlaufdruck auf das Regelgerät des Reglers, so daß statt des Durchflusses der Differenzdruck zwischen Vorlauf und Rücklauf des Heizkreises geregelt wird. Die Vorrichtung ist aufwendig, um so mehr, als sie in der Hauptleitung sowie in den Steuerleitungen Drosseln, Verzweigungen und darüber hinaus ein zusätzliches Absperrventil aufweisen muß.

Der Erfindung liegt die Aufgabe zugrunde, einen vereinfachten Regler zur alternativen Durchfluß- bzw. Differenzdruckregelung zu schaffen.

Erfindungsgemäß wird die genannte Aufgabe mit einem Regler der eingangs genannten Art gelöst, welcher dadurch gekennzeichnet ist, daß in einem gemeinsamen Hohlraum eines Reglergehäuses zwei Regelglieder hintereinander zur alternativen Steuerung des Ventils durch eines der Regelglieder in Abhängigkeit der Sollwertvorgaben derselben angeordnet sind.

Erfindungsgemäß ist also in dem gemeinsamen Reglergehäuse, das lediglich eine Kammer aufweist, ein Stellantrieb mit zwei voneinander unabhängigen Regelgliedern vorgesehen, die die Kammer oder den Hohlraum des Reglergehäuses in drei Druckräume unterteilen. Zum Einsatz als Strangregler sind zwei der Druckräume über Steuerleitungsanschlüsse mit dem Heizungsvorlauf und dem Ventilgehäuseeingang im Heizungsrücklauf verbindbar. Der dritte Druckraum ist vom Druck in einem Durchfluß-Sollwert-Einsteller beaufschlagt, wobei dieser Druck durch ein Meßrohr am Ventilanschlußstück erfaßt wird und mittels Bohrungen in eine der Kammern eingeleitet wird. Mit dem Stellantriebsgehäuse ist außerdem eine weitere, als Differenzdruck-Sollwert-Einstellvorrichtung ausgebildete Einstellvorrichtung verbunden.

Ein wesentlicher Vorteil des erfindungsgemäßen Reglers liegt darin, daß die Sollwert-Einstellung vorgenommen werden kann, ohne daß sämtliche Thermostatventile der an einem Strang liegenden einzelnen Heizkörper vollständig geöffnet sein müssen. Hierdurch kann erhebliche Arbeitskraft und Arbeitszeit, insbesondere bei Inbetriebnahme, aber auch nach Reparaturen, bei der Wartung etc. eingespart werden. Die Erfindung bietet den wesentlichen Vorteil, daß sie in einer Regleranordnung und insbesondere einem Membrangehäuse zwei unabhängige Membranantriebe aufweist, deren einer die Durchflußregelung und deren anderer die Druckdifferenzregelung ermöglicht. Beide Sollwerte sind direkt am Regler ohne zusätzliche weitere Abgleiche und unabhängig von Anlagendruckabfällen einstellbar.

Gemäß bevorzugter Ausgestaltungen ist vorgesehen, daß zwischen beiden Regelgliedern ein Anlagesitz für zumindestens ein Regelglied angeordnet ist, wobei insbesondere der Anlagesitz ringförmig ausgebildet ist. Ein oder beide Durchfluß-Regelglieder sind vorzugsweise als Membran-Regelglieder mit einer auf einem Membranteller aufliegenden Membran ausgebildet, so daß die Druckräume im Hohlraum des Reglergehäuses durch die Membranen als bewegliche Wände unterteilt werden.

Weitere Ausbildungen sehen vor, daß im Anlagesitz Bohrungen ausgebildet sind und daß mindestens eine Membran mit ihrem Umfangsrand zwischen einem Randbereich des Anlagesitzes und einem Gehäuseteil eingespannt ist.

In äußerst bevorzugter Ausgestaltung und insbesondere zum Einsatz als Strangregler für einzelne Versorgungsstränge einer Heizungsanlage sieht die Erfindung vor, daß im Reglergehäuse ein erster Druckraum mit einem Bereich stromab der Drosselstelle in Fluidverbindung steht, der erste Druckraum durch ein erstes Regelglied von einem mit einem ersten Steueranschluß versehenen zweiten Druckraum getrennt ist und dieser durch ein zweites Regelglied von einem mit einem zweiten Steueranschluß versehenen dritten Druckraum getrennt ist, wobei insbesondere mit dem Reglergehäuse ein Sollwert-Einsteller, insbesondere zur Druck-Sollwert-Einstellung, vorgesehen ist.

In bevorzugten Ausgestaltungen ist dabei vorgesehen, daß das Durchfluß-Regelglied gegen das Verschlußstück drückt, ohne mit diesem fest verbunden zu sein und/oder daß durch das Durchfluß-Regelglied ein mit dem Druck-Regelglied verbundener Stößel ragt, der gegen das Verschlußstück drückt, ohne mit diesem fest verbunden zu sein.

Um bei Schließen des Druck-Regelglieds und dennoch übermäßiger Druckdifferenz einen Ausgleich zu ermöglichen, sieht eine bevorzugte Weiterbildung vor, daß im Druck-Regelglied ein Überdruckventil ausgebildet ist.

In einer weiteren Ausbildung ist vorgesehen, daß der Durchfluß-Sollwert-Einsteller aus einem in einem Drehsitz sitzenden zylinderförmigen, kappenförmigen Drehkörper besteht, der in seiner Umfangswandung einen sich kontinuierlich erweiternden Umfangsschlitz aufweist, so daß durch Verdrehen des Drehkörpers der effektive Querschnitt der Drossel zwischen Einlaß und Innerem des Drehkörpers einstellbar ist, wobei insbesondere der Durchfluß-Sollwert-Einsteller durch eine Abdeckkappe abgedeckt ist. Hierdurch kann nach Entfernen der Kappe eine einfache, genaue und schnelle Einstellung des Durchfluß-Sollwertes erreicht werden. Die Abdeckkappe dient dazu, ein unbefugtes oder unwillkürliches Verstellen des Durchfluß-Sollwertes zu verhindern, wozu sie plombierbar sein kann.

Gemäß einer äußerst bevorzugten Ausgestaltung ist vorgesehen, daß die Symmetrieachse des Ventils senkrecht zur Symmetrieachse des Einlasses und/oder des Auslasses steht. Hierdurch ist eine sehr kompakte Ausbildung insbesondere des Ventilgehäuses, aber auch eine einfache Verbindung desselben mit dem Reglergehäuse möglich.

Bei dem erfindungsgemäßen Regler ist in bevorzugter Ausgestaltung vorgesehen, daß der stromab der Drossel befindliche Bereich, der mit dem Druckraum in Verbindung steht, stromauf des Ventils angeordnet ist. Während grundsätzlich die Verbindung zwischen der Druckmeßstelle stromab der Drosselstelle und gegebenenfalls stromauf des den Durchfluß regelnden Ventils vorgesehen sein kann, sieht eine bevorzugte Ausgestaltung vor, daß mittig im Verschlußstück ein Rohrteil sitzt, das auch bei geschlossenem Ventil in den Bereich stromauf des Ventils ragt und dessen Inneres über Kanäle mit dem Druckraum in Verbindung steht.

Die Regelglieder können in unterschiedlicher Weise ausgebildet sein. Wenn sie als Membran-Regelglieder ausgebildet sind, kann das Reglergehäuse, in dem sich die Regelglieder befinden, und damit die gesamte Anordnung insbesondere quer zur Durchflußrichtung der zu regelnden strömenden Flüssigkeit kompakt ausgebildet sein.

Eine bevorzugte weitere Ausgestaltung sieht vor, daß der Druck-Sollwert-Einsteller derart ausgebildet ist, daß das Reglergehäuse an seiner dem Ventilgehäuse abgewandten Seite mit einer mit einem Außengewinde versehenen Führung für ein Übertragungsteil versehen ist und daß am freien Ende des Übertragungsteils ein erstes Widerlager und an der Führung ein weiteres Widerlager für eine Sollwertfeder angeordnet sind, die zwischen den beiden Widerlagern eingespannt ist, und daß das Widerlager durch Verdrehen auf der Führung in seiner axialen Höhe entlang der Führung verstellbar ist.

Weitere Vorteile und Merkmale des erfindungsgemäßen Strangreglers ergeben sich aus den Ansprüchen und aus der nachfolgenden Beschreibung, in der eine bevorzugte Ausgestaltung des Strangreglers unter Bezugnahme auf die Zeichnung im einzelnen erläutert ist. Dabei zeigt:
- Figur 1: eine bevorzugte Ausgestaltung des erfindungsgemäßen Reglers im Schnitt; und

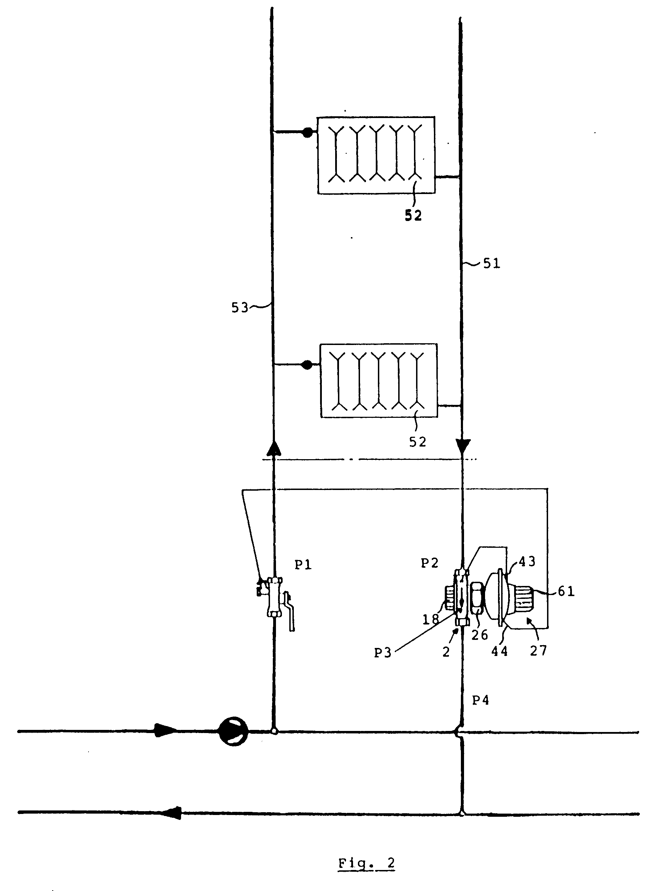

- Figur 2: den Einsatz des erfindungsgemäßen Reglers als Strangregler in einer Heizungsanlage.

Der erfindungsgemäße Regler 1 weist in der dargestellten Ausbildung als Strangregler zunächst ein Ventilgehäuse 2 auf. Das Ventilgehäuse 2 hat einen Einlaß 3 und einen Auslaß 4. Einlaß 3 und Auslaß 4 sind durch einen Ventilsitz 6 eines Ventils 7 voneinander getrennt, dessen Symmetrieachse A senkrecht zur Achse B von Einlaß 3 und Auslaß 4 gerichtet ist. Stromauf des Ventils 7 ist ein Durchfluß-Sollwert-Einsteller 8 vorgesehen, der zum Einlaß 3 hin eine Drosselstelle 9 bildet. Der Durchfluß-Sollwert-Einsteller 8 ist als zylindrischer, kappenförmiger, zum Ventil 7 hin offener Drehkörper 11 ausgebildet, in dessen Umfangswandung ein sich kontinuierlich erweiternder Schlitz 12 ausgebildet ist. Durch Verdrehen des Durchfluß-Sollwert-Einstellers 8 in seinem Sitz 13 des Gehäuses 2 kann der Querschnitt des Einlaßbereiches vom Einlaß 3 ins Innere 14 des Drehkörpers verändert werden, je nachdem, ob ein größerer Bereich des Schlitzes 12 oder ein verjüngter Bereich des Schlitzes 12 zum Einlaß 3 hin gerichtet ist.

Das Verstellen des Durchfluß-Sollwert-Einstellers 8 erfolgt über ein Betätigungsteil 16, das mittels eines O-Rings 17 dicht im Gehäuse 2 einsitzt. Gegen unbefugtes Verstellen ist das Betätigungsteil 16 mittels einer Kappe 18 geschützt, welche durch eine Plombe 19 verplombt sein kann.

Das Ventil 7 weist ein gegen den Ventilsitz 6 bewegbares Verschlußstück 21 auf, welches an einer Stirnseite einen Dichtring 22 trägt, der auf dem Ventilsitz 6 dichtend zum Anliegen gelangen kann.

Das Verschlußstück 21 ist in einem fest im Ventilgehäuse 2 einsitzenden Führungsteil 23 geführt, wobei eine Abdichtung mittels eines Dichtrings 24 zur Druckentlastung des Verschlußstücks erfolgt.

Mit dem Ventilgehäuse 2 ist über eine Überwurfmutter 26 ein Reglergehäuse 27 verbunden, in dem hintereinander in Reihe ein erstes Regelglied 28, das infolgedessen auch als Durchfluß-Regelglied 28 bezeichnet wird, und ein zweites Regelglied 29, das auch als Druck-Regelglied 29 bezeichnet wird, angeordnet sind. Beide Regelglieder 28, 29 sind als Membranregelglieder mit einer Membran 31 bzw. 32 mit jeweils einem Membranteller 33, 34 ausgebildet.

Die Regelglieder 28, 29 sind in einem einzigen gemeinsamen Hohlraum des Reglergehäuses 27 angeordnet. Das Reglergehäuse 27 besteht aus einem Grundteil 27a und einem dieses teilweise umgreifenden Deckteil 27b, das mit seinem Rand einen entsprechenden Bereich des Grundteils umrändelt.

Zwischen beiden ist ein Ringteil 30 angeordnet, zwischen dem und dem Grundteil 27a die Membran 32 und zwischen dem und dem Deckteil 27b die Membran 31 eingespannt sind, so daß die Membranen derart formschlüssig festgehalten sind. Das Ringteil 30 dient als Anlagesitz für den Regelkörper 28. Damit auch bei Anlage des Regelkörpers 28 am Ringteil 30 zwischen dem Anschluß 33 und dem Zwischenraum zwischen Ringteil 30 und Membran 31 im Randbereich derselben einerseits und dem restlichen Raum 37 auf der anderen Seite des Ringteils 30 (zwischen den Regelkörpern 28 und 29) ein Fluidfluß und damit ein Druckausgleich möglich ist, ist das Ringteil 30 mit Durchbrüchen 30a versehen.

Diese Ausgestaltung gestattet die gleichzeitige Aufnahme beider voneinander unabhängiger Membranen.

Durch das Regelglied 28 werden zwei Druckräume 36, 37 und durch das Regelglied 29 der Druckraum 27 von einem Druckraum 38 getrennt.

Der Druckraum 36 steht über ein zentrisch im Verschlußstück 21 axial einsitzendes Rohr 41, das auch bei geschlossenem Ventil 7 in den stromab der Drosselstelle 9 innerhalb des Durchfluß-Sollwert-Einstellers befindlichen Raum ragt, sowie einen das Rohrteil 41 fortsetzenden Kanal 42 in Form einer Bohrung innerhalb des Verschlußstücks 21 eben mit dem innerhalb des Durchfluß-Sollwert-Einstellers 8 stromab der Drosselstelle 9 befindlichen Raum in Fluidverbindung.

Mit dem Druckraum 37 ist ein Steuerleitungsanschluß 43 und mit dem Druckraum 38 ein Steuerleitungsanschluß 44 verbunden.

Der das Verschlußstück 21 aufweisende Ventilkörper 21a wird durch eine Schraubenfeder 46 zum Öffnen des Ventils 7 gegen das Durchfluß-Regelglied 28 gedrückt. Dieses wird mittels einer Schraubenfeder 47 (Sollwertfeder für die Durchflußregelung) gegen einen Sitz 48 gedrückt.

Zentrisch in dem Druckregelglied 29 ist ein Überdruckventil 51 mit einer gegen einen Dichtungsring drückenden Kugel zwischen den Druckräumen 37 und 38 vorgesehen.

Mit dem Membranteller 34 des Druckregelglieds 29 und damit mit diesem ist ein Stößel 52 verbunden, der in eine axiale Bohrung 53 in der dem Verschlußstück 21 abgewandten Seite des Ventilkörpers 21a ragt, und mittels dessen das Druck-Regelglied 29 den Ventilkörper 21a und damit das Verschlußstück 21 beaufschlagen und das Ventil 7 steuern kann. Der Stößel 52 durchragt ein Zentralteil des Durchfluß-Regelglieds 28, wobei eine Dichtung mittels eines O-Rings vorgesehen ist.

Das Reglergehäuse 27 weist an seiner dem Ventilgehäuse 2 abgewandten Seite eine Führung 54 für einen mit dem Druck-Regelglied 29 verbundenen Übertragungsteil 56 auf, welches an seinem dem Membranteller 34 abgewandten Ende mit einem Ringteil 57 verbunden ist, durch welches das Übertragungsteil und damit das Druck-Regelglied mittels einer Schraubenfeder 58, die an einem Ringteil 59 der Führung 54 ihr weiteres Widerlager findet, in eine vom Ventilgehäuse 2 abgewandte Öffnungsstellung gedrückt wird.

Das Ringteil 59 sitzt auf der Führung 54 verschraubbar auf, so daß seine axiale Höhe in Richtung der Führung und damit die Vorspannung der Schraubenfeder 58 (Sollwertfeder für die Druckdifferenzregelung) eingestellt werden kann.

Die Teile 54 bis 59 sind durch eine ebenfalls plombierbare Abdeckkappe 61 am Reglergehäuse 27 abgedeckt.

Mittels des Durchfluß-Sollwert-Einstellers 8 kann der Durchfluß-Sollwert über den Druckabfall über die Drossel 9 eingestellt werden.

Wenn der Druckabfall P2-P3 zwischen Einlaß 3, mit dem der Steuerleitungsanschluß 43 in Fluidverbindung steht, und nach der Drosselstelle 9 zu groß wird, so wird durch den in den Druckkammern 36, 37 gegebenen Druckunterschied durch Bewegung des Durchfluß-Regelglieds 28 die Öffnung des Ventils 7 reduziert, wodurch der Druck in der innerhalb des Durchfluß-Sollwert-Einstellers 8, stromab der Drossel 9 befindlichen Druckmeßstelle für den Druck P3 erhöht wird.

Wenn der Durchfluß und damit der Druckunterschied über die Drossel 9 hin zu gering wird, kann das Durchfluß-Regelglied 28 das Ventil 7 nicht mehr steuern. In diesem Falle kommt das Druckregelglied 29 zur Wirkung. Bei hinreichendem Druckunterschied P1-P2 zwischen der Druckkammer 38 und der Druckkammer 37 bewegt es den Stößel 52 gegen den Ventilkörper 21a und veranlaßt damit das Verschlußstück 21 zur Reduzierung der Öffnung des Ventils 7. Der zur Bewegung erforderliche Druckunterschied P1-P2 kann dabei durch Verstellen der axialen Höhe des Ringteils 59 und damit der Vorspannung der Feder 58 eingestellt werden. Wenn der Druckunterschied zwischen den Druckräumen 38 und 37 so groß wird, daß das Ventil 7 geschlossen wird und der Druck weiterhin ansteigt, so kann das Überdruckventil 51 öffnen und derart einen Druckausgleich zwischen den Räumen 38, 37 bewirken.

Der erfindungsgemäße Regler wird als Strangregler vorzugsweise in den Rücklauf 51 des mehrere Verbraucher (Heizkörper 52) versorgenden Versorgungsstranges einer Heizungsanlage eingebaut.

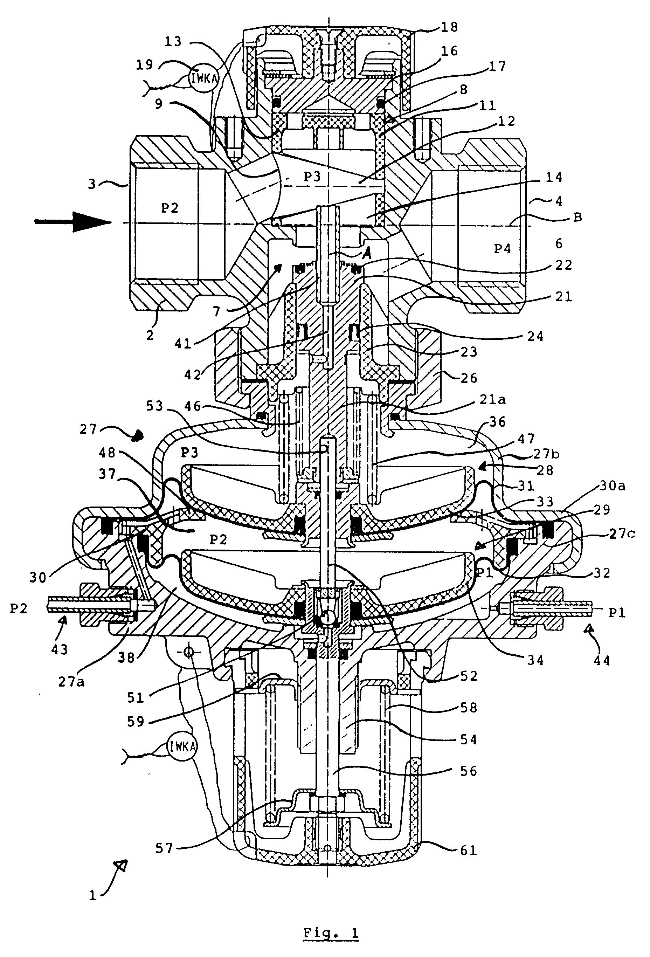

Der Druckraum 38 wird über den Anschluß 44 mit dem Vorlauf 53 des Versorgungsstranges verbunden, in dem der relativ höchste Druck P3 wirkt. Die Kammer 37 wird über den Anschluß 43 mit dem Einlaß 3 des Ventils 2 im Rücklauf 51 verbunden, in dem der Druck P2 herrscht. Die Verbindung des Inneren des Drosselkörpers 11 hinter der Drosselstelle 9, wo der Druck P3 herrscht, mit dem Druckraum 36 ist aus Figur 1 entnehmbar und wurde unter Bezug auf diese Zeichnung erläutert.

Durch den erfindungsgemäßen Regler können Durchfluß (über die Differenz P2-P3) und die Druckdifferenz P1-P2 zwischen Vorlauf und Rücklauf unabhängig voneinander hinsichtlich ihrer Sollwerte eingestellt und gemessen werden. Es ist eine sehr einfache Einstellung des Stranges auf den Durchfluß und die fragliche Druckdifferenz möglich, ohne daß, wie dies bei bekannten Regelvorrichtungen der Fall ist, Druck- und Durchflußeinstellung nicht unabhängig und getrennt voneinander möglich sind, sondern lediglich eine gemeinsame Einstellung vorgenommen wird, indem beispielsweise bei einer Druckmessung das Ventil selbst und damit der durchflußabhängige Druckabfall über diesem mit eingeschlossen und nicht abgetrennt ist und damit nicht der Druck rein über die Verbraucher voreingestellt und geregelt werden kann.

## Patentansprüche

1. Regler, insbesondere für einzelne Versorgungsstränge einer Heizungsanlage, mit einem Ventilgehäuse (2) mit einem Ventil (7), das durch mindestens ein Durchflußregelglied (8) steuerbar ist, dadurch gekennzeichnet, daß in einem gemeinsamen Hohlraum eines Reglergehäuses (27) zwei Regelglieder (28, 29) hintereinander zur alternativen Steuerung des Ventils (7) durch eines der Regelglieder (28, 29) in Abhängigkeit der Sollwertvorgaben derselben angeordnet sind.

2. Regler nach Anspruch 1, dadurch gekennzeichnet, daß zwischen beiden Regelgliedern (28, 29) ein Anlagesitz (48) für zumindestens ein Regelglied angeordnet ist.

3. Regler nach Anspruch 1, dadurch gekennzeichnet, daß der Anlagesitz (48) ringförmig ausgebildet ist.

4. Regler nach einem der vorangehenden Ansprüche, dadurch gekennzeichnet, daß mindestens ein Regelglied (28, 29) als Membran-Regelglied mit einer auf einem Membranteller (33, 34) aufliegenden Membran (31, 32) ausgebildet ist.

5. Regler nach Anspruch 4, dadurch gekennzeichnet, daß beide Regelglieder (28, 29) als Membran-Regelglieder mit einer auf einem Membranteller (33, 34) aufliegenden Membran (31, 32) ausgebildet sind.

6. Regler nach einem der Ansprüche 2 bis 5, dadurch gekennzeichnet, daß im Anlagesitz (48) Bohrungen (30a) ausgebildet sind.

7. Regler nach einem der Ansprüche 2 bis 6, dadurch gekennzeichnet, daß mindestens eine Membran mit ihrem Umfangsrand zwischen einem Randbereich (30) des Anlagesitzes (48) und einem Gehäuseteil eingespannt ist.

8. Regler nach einem der vorangehenden Ansprüche, dadurch gekennzeichnet, daß im Reglergehäuse (27) ein erster Druckraum (36) mit einem Bereich stromab der Drosselstelle (9) in Fluidverbindung (41, 42) steht, der erste Druckraum (36) durch ein erstes Regelglied (28) von einem mit einem ersten Steueranschluß (43) versehenen zweiten Druckraum (37) getrennt ist und dieser durch ein zweites Regelglied (29) von einem mit einem zweiten Steueranschluß (44) versehenen dritten Druckraum (38) getrennt ist.

9. Regler nach einem der vorangehenden Ansprüche, dadurch gekennzeichnet, daß mit dem Regelgliedgehäuse (27) ein Sollwert-Einsteller (54 bis 59), insbesondere zur Druck-Sollwert-Einstellung, verbunden ist.

10. Regler nach einem der Ansprüche 1 bis 9, dadurch gekennzeichnet, daß das erste Regelglied (28) gegen das Verschlußstück (21) drückt, ohne mit diesem fest verbunden zu sein.

11. Regler nach einem der Ansprüche 1 bis 10, dadurch gekennzeichnet, daß durch das erste Regelglied (28) ein mit dem zweiten Regelglied (29) verbundener Stößel (52) ragt, der gegen das Verschlußstück (21) drückt, ohne mit diesem fest verbunden zu sein.

12. Regler nach einem der vorangehenden Ansprüche, dadurch gekennzeichnet, daß im zweiten Regelglied (29) ein Überdruckventil (51) ausgebildet ist.

13. Regler nach einem der vorangehenden Ansprüche, dadurch gekennzeichnet, daß der Durchfluß-Sollwert-Einsteller (8) aus einem in einem Drehsitz (13) sitzenden zylinderförmigen, kappenförmigen Drehkörper (11) besteht, der in seiner Umfangswandung einen sich kontinuierlich erweiternden Umfangsschlitz (12) aufweist, so daß durch Verdrehen des Drehkörpers (11) der effektive Querschnitt der Drossel (9) zwischen Einlaß (3) und Innerem des Drehkörpers (11) einstellbar ist.

14. Vorrichtung nach einem der vorangehenden Ansprüche, dadurch gekennzeichnet, daß der Durchfluß-Sollwert-Einsteller (8) durch eine Abdeckkappe (18) abgedeckt ist.

15. Regler nach einem der vorangehenden Ansprüche, dadurch gekennzeichnet, daß die Symmetrieachse (A) des Ventils (7) senkrecht zur Symmetrieachse (B) des Einlasses (3) und/oder des Auslasses (4) steht.

16. Regler nach einem der vorangehenden Ansprüche, dadurch gekennzeichnet, daß der stromab der Drossel (9) befindliche Bereich, der mit dem Druckraum (36) in Verbindung steht, stromauf des Ventils (7) angeordnet ist.

17. Regler nach Anspruch 16, dadurch gekennzeichnet, daß mittig im Verschlußstück (21) ein Rohrteil (41) sitzt, das auch bei geschlossenem Ventil (7) in den Bereich stromauf des Ventils (7) ragt und dessen Inneres über Kanäle (42) mit dem Druckraum (36) in Verbindung steht.

18. Regler nach einem der vorangehenden Ansprüche, dadurch gekennzeichnet, daß der Druck-Sollwert-Einsteller derart ausgebildet ist, daß das Reglergehäuse (27) an seiner dem Ventilgehäuse (2) abgewandten Seite mit einer mit einem Außengewinde versehenen Führung (54) für ein Übertragungsteil (56) versehen ist und daß am freien Ende des Übertragungsteils (56) ein erstes Widerlager (57) und an der Führung (54) ein weiteres Widerlager (59) für eine Sollwertfeder (Schraubenfeder 58) angeordnet sind, die zwischen den beiden Widerlagern (57, 59) eingespannt ist, und daß das Widerlager (59) durch Verdrehen auf der Führung (54) in seiner axialen Höhe entlang der Führung (54) verstellbar ist.
